(19) Europäisches Patentamt
European Patent Office
Office européen des brevets

(11) **EP 2 379 987 B1**

(12) **EUROPÄISCHE PATENTSCHRIFT**

(45) Veröffentlichungstag und Bekanntmachung des Hinweises auf die Patenterteilung:
**04.12.2013 Patentblatt 2013/49**

(51) Int Cl.:
***G01D 5/14*** *(2006.01)*

(21) Anmeldenummer: **09801686.8**

(22) Anmeldetag: **14.12.2009**

(86) Internationale Anmeldenummer:
**PCT/EP2009/067092**

(87) Internationale Veröffentlichungsnummer:
**WO 2010/069928 (24.06.2010 Gazette 2010/25)**

(54) **UMDREHUNGSZÄHLER UND VERFAHREN ZUM FESTSTELLEN DER UMDREHUNGSZAHL EINER WELLE**

REVOLUTION COUNTER AND METHOD FOR DETERMINING THE NUMBER OF REVOLUTIONS OF A SHAFT

COMPTE-TOURS ET PROCÉDÉ DE DÉTERMINATION DU NOMBRE DE TOURS D'UN ARBRE

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **19.12.2008 DE 102008054973**

(43) Veröffentlichungstag der Anmeldung:
**26.10.2011 Patentblatt 2011/43**

(73) Patentinhaber: **Dr. Johannes Heidenhain GmbH 83301 Traunreut (DE)**

(72) Erfinder: **OBERHAUSER, Johann 83377 Vachendorf (DE)**

(56) Entgegenhaltungen:
**EP-B1- 1 076 226       DE-A1-102006 035 120
DE-A1-102006 046 531**

EP 2 379 987 B1

## Beschreibung

Die Erfindung betrifft einen Umdrehungszähler nach dem Anspruch 1 sowie ein Verfahren zum Feststellen der Umdrehungszahl einer Welle nach dem Anspruch 5. Ein derartiger Umdrehungszähler, bzw. ein erfindungsgemäßes Verfahren ist beispielsweise für den Einsatz in einem Positionsmessgerät, insbesondere in einem Multiturn-Drehgeber geeignet.

Positionsmessgeräte zum Erfassen der Winkelposition einer Welle sind in der Antriebstechnik weit verbreitet. Derartige Geräte enthalten eine Maßverkörperung, meist in Form einer Codescheibe, auf der eine Teilungsstruktur aufgebracht ist und deren Abtastung die Ermittlung der Winkelposition der Welle erlaubt. Hierbei kommen meist optische, magnetische oder auch induktive Abtastprinzipien zum Einsatz.

Häufig ermitteln solche Positionsmessgeräte neben der Position innerhalb einer Umdrehung der Welle auch noch die Anzahl der zurückgelegten Umdrehungen. Hier werden, entweder durch Abtastung zusätzlicher Teilungsstrukturen auf der bereits für die Erfassung der Winkelposition der Welle  vorhandenen Codescheibe, oder durch Abtastung einer separat an der Welle angeordneten zusätzlichen Maßverkörperung, richtungsabhängig Zählimpulse für einen Zähler erzeugt, wobei der Zählerwert ein Maß für die Anzahl der zurückgelegten Umdrehungen der Welle ist. Auch hier können optische, magnetische, sowie induktive Abtastprinzipien eingesetzt werden, wobei für die Ermittlung der Winkelposition der Welle innerhalb einer Umdrehung und die Ermittlung der Umdrehungszahl durchaus verschiedene Abtastprinzipien verwendet werden können, beispielsweise eine optische Abtastung für die Winkelposition und eine magnetische Abtastung für die Umdrehungszahl.

Dem Nachteil, dass bei einem Wegfall der Versorgungsspannung des Umdrehungszählers, beispielsweise wenn die Maschine, die die zu messende Welle antreibt, abgeschaltet wird, der Zählerwert verloren geht, wird üblicherweise dadurch entgegengewirkt, dass für diesen Fall eine Batterie vorgesehen ist, die die Spannungsversorgung für den Umdrehungszähler während dieser Zeit übernimmt. Ebenfalls ist es bekannt, dass die Lebensdauer der Batterie verlängert werden kann, wenn im Batteriebetrieb die Position der Welle zur Feststellung der Umdrehungszahl nicht kontinuierlich erfasst, sondern nur in bestimmten Zeitabständen ermittelt wird. Es findet also nur ein Pulsbetrieb statt.

So beschreibt die DE102006046531A1 der Anmelderin einen auf dem induktiven Abtastprinzip basierenden Drehgeber, der einen Betriebsmodus für Batteriebetrieb aufweist, bei dem der Erregerstrom der Erregerleiterbahnen gepulst wird und nur dann in den Empfängerleiterbahnen drehwinkelabhängige Spannungsimpulse induziert werden.

Die DE102006035120A1 beschreibt eine Schaltungsanordnung, bei der die Winkelposition, insbesondere die Umdrehungszahl, der Welle mittels Magnetfeldsensoren ermittelt wird. Auch hier ist ein Stromsparmodus vorgesehen, der durch einen Pulsbetrieb realisiert ist. Weiterhin wurde erkannt, dass es beim Übergang eines Quadranten zum nächsten Quadranten zu Problemen bei der Zählung kommen kann.

Weiter beschreibt die EP1076226B1 einen absoluten Winkelkodierer, bei dem der Umdrehungszähler mittels einer optischen Abtastung realisiert ist, die ebenfalls nur gepulst betrieben wird. Hier wurde der Stromverbrauch noch weiter verringert, indem bei Stillstand oder sehr langsamer Drehgeschwindigkeit der Welle die Anzahl der Messimpulse reduziert und erst dann wieder auf eine maximale Pulszahl erhöht wird, wenn eine Überschreitung des aktuellen Winkelsegments erkannt wird. Hier kann es aber passieren, dass, bleibt die Welle zufällig genau an einem Übergang von einem Winkelsegment zum benachbarten stehen, beispielsweise aufgrund von systemimmanenten Rauschen, sporadisch ein Segmentübergang detektiert wird und so trotz Stillstand der Welle immer wieder auf maximale Pulszahl geschaltet wird.

Es ist daher Aufgabe der Erfindung, einen verbesserten Umdrehungszähler, sowie ein verbessertes Verfahren zur Feststellung der Umdrehungszahl einer Welle zu entwickeln.

Diese Aufgabe wird gelöst durch einen Umdrehungszähler nach Anspruch 1, bzw. ein Verfahren nach Anspruch 5.

Der Umdrehungszähler zum Feststellen der Umdrehungszahl einer Welle umfasst demnach
Sensoren, mit denen Positionswerte erzeugbar sind, welche die Winkelposition der Welle definieren,
eine Bestimmungseinheit, in der aus den Positionswerten Entscheidungssignale erzeugbar sind, die Zählsegmente innerhalb einer Umdrehung der Welle bestimmen,
eine Zählsteuerungseinheit, die in Abhängigkeit von der zeitlichen Abfolge der Zählsegmente den Umdrehungszähler in einem ersten Betriebsmodus oder in einem zweiten Betriebsmodus betreibt und Zählsignale für einen Zähler generiert, und die Zählsteuerungseinheit in den zweiten Betriebsmodus umschaltet, der ein energiesparender gepulster Betrieb ist, wenn nach einer definierten Zeit keine Änderung eines Zählsegments erfolgt und
in den ersten Betriebsmodus umschaltet, wenn eine Änderung eines Zählsegments erfolgt.

Weiter ist die Bestimmungseinheit dazu ausgelegt, zwischen jeweils zwei Zählsegmenten zusätzlich einen Unsicherheitsbereich zu bestimmen, und die Zählsteuerungseinheit ist dazu ausgelegt, die Unsicherheitsbereiche, die an ein Zählsegment angrenzen, das zu einer Umschaltung in den zweiten Betriebsmodus geführt hat, für die Umschaltung vom zweiten Betriebsmodus in den ersten Betriebsmodus nicht zu berücksichtigen.

Der Umdrehungszähler kann besonders energiesparend betrieben werden, wenn der erste und der zweite Betriebsmodus jeweils ein gepulster Betrieb des Umdrehungszählers ist, bei dem mit einer vorgegebenen Abtastrate gepulst die Positionswerte erzeugbar sind, und die Abtastrate im ersten Betriebsmodus höher ist, als im zweiten Betriebsmodus.

Die Bestimmungseinheit ist dazu ausgelegt, eine Umdrehung der Welle in mehrere, insbesondere in vier, voneinander unterscheidbare Zählsegmente und jeweils zumindest einen zwischen zwei Zählsegmenten liegenden Unsicherheitsbereich zu codieren.

Die Bestimmungseinheit weist Komparatoren auf, die beispielsweise einen Fensterkomparator bilden.

Mit der Erfindung wird weiterhin ein Verfahren zum Feststellen der Umdrehungszahl einer Welle angegeben, bei dem Sensoren vorgesehen sind, mit denen Positionswerte erzeugt werden, welche die Winkelposition der Welle definieren, und die einer Bestimmungseinheit zugeführt werden, die aus den Positionswerten Entscheidungssignale erzeugt, die Zählsegmente innerhalb einer Umdrehung der Welle bestimmen, dabei werden

die Entscheidungssignale einer Zählsteuerungseinheit zugeführt, die in Abhängigkeit von der zeitlichen Abfolge der Zählsegmente den Umdrehungszähler in einem ersten Betriebsmodus oder in einem zweiten Betriebsmodus betreibt und Zählsignale für einen Zähler generiert, wobei die Zählsteuerungseinheit in den zweiten Betriebsmodus umschaltet, der ein energiesparender gepulster Betrieb ist, wenn nach einer definierten Zeit keine Änderung eines Zählsegments festgestellt wird und in den ersten Betriebsmodus umschaltet, wenn eine Änderung eines Zählsegments festgestellt wird.

Die Bestimmungseinheit bestimmt zwischen jeweils zwei Zählsegmenten zusätzlich einen Unsicherheitsbereich, und die Unsicherheitsbereiche, die an ein Zählsegment angrenzen, das zu einer Umschaltung in den zweiten Betriebsmodus geführt hat, wird für die Umschaltung vom zweiten Betriebsmodus in den ersten Betriebsmodus nicht berücksichtigt.

Ein besonders energiesparender Betrieb ergibt sich, wenn der erste und der zweite Betriebsmodus jeweils ein gepulster Betrieb des Umdrehungszählers ist, bei dem mit einer vorgegebenen Abtastrate gepulst die Positionswerte erzeugt werden, und die Abtastrate im ersten Betriebsmodus höher ist, als im zweiten Betriebsmodus.

Die Bestimmungseinheit codiert eine Umdrehung der Welle in mehrere voneinander, insbesondere vier, unterscheidbare Zählsegmente und jeweils zumindest einen zwischen zwei Zählsegmenten liegenden Unsicherheitsbereich.

Vorteilhafte Details ergeben sich aus den abhängigen Ansprüchen.

Vorteile sowie Einzelheiten der vorliegenden Erfindung ergeben sich aus der nachfolgenden Beschreibung eines Umdrehungszählers, bzw. eines Verfahrens zum Feststellen der Umdrehungszahl einer Welle anhand der Figuren.

Dabei zeigen

Figur 1    ein Blockdiagramm eines erfindungsgemäßen Umdrehungszählers;

Figur 2    die Positionswerte der Sensoren mit daraus ermittelten Zählsegmenten und Unsicherheitsbereichen;

Figur 3    eine Bestimmungseinheit zur Bildung unterscheidbarer Winkelsektoren;

Figur 4    ein Zeigerdiagramm zur Erläuterung des Prinzips der Umdrehungszählung;

Figur 5    ein Diagramm zur Veranschaulichung der Reduzierung der Abtastrate über der Zeit und

Figur 6    ein Prinzipschaltbild einer weiteren Bestimmungs-ein-heit.

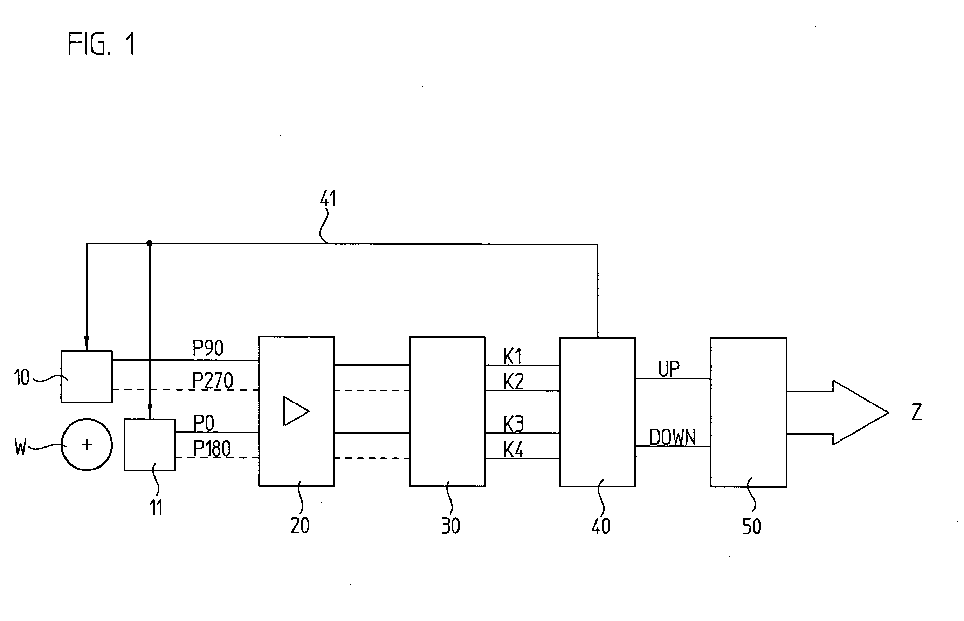

Figur 1 zeigt ein Blockdiagramm eines erfindungsgemäßen Umdrehungszählers. Eine Welle W wird mittels zweier Sensoren 10, 11 abgetastet. Die vorliegende Erfindung ist unabhängig vom physikalischen Prinzip der Abtastung. Entsprechend kann sich der Aufbau der Sensoren 10, 11, sowie die zugrundeliegende Abtasteinheit unterscheiden. Findet ein optisches Abtast-prinzip Anwendung, ist beispielsweise eine Codescheibe drehfest mit der Welle W verbunden, auf der sich eine Codespur befindet, die aus zwei durch ihre optischen Eigenschaften (lichtdurchlässig/lichtundurchlässig; reflektierend/nicht reflektierend) unterscheidbaren Ringsegmenten, die je einen Winkelbereich von 180° umschließen, bestehen. Die Abtastung erfolgt in bekannter Weise mittels einer Lichtquelle, entsprechend handelt es sich bei den Sensoren 10, 11 um Photodetektoren. Beim magnetischen Abtastprinzip ist an der Welle W ein scheibenförmiger Magnet angeordnet, dessen Magnetpole 180° einer Umdrehung der Welle W unterscheidbar machen. In diesem Fall erfolgt die Abtastung mittels Magnetsensoren 10, 11. Bei einer induktiven Abtastung handelt es sich bei den Sensoren 10, 11 um Empfängerspulen, in denen durch ein elektromagnetisches Feld, das von einer Erregerspule erzeugt wird, eine Spannung induziert wird, deren Amplitude von der Position von magnetfeldverstärkenden, bzw. abschwächenden Bereichen einer Codespur auf einer Codescheibe, die mit der Welle W drehfest verbunden ist, abhängt. Die Bereiche der Codespur umschließen wiederum Winkelsegmente von 180°, während die Empfängerspulen so ausgeführt sind, dass die Amplitude der induzierten Spannung je Umdrehung der Welle ein Maximum und ein Minimum erreicht.

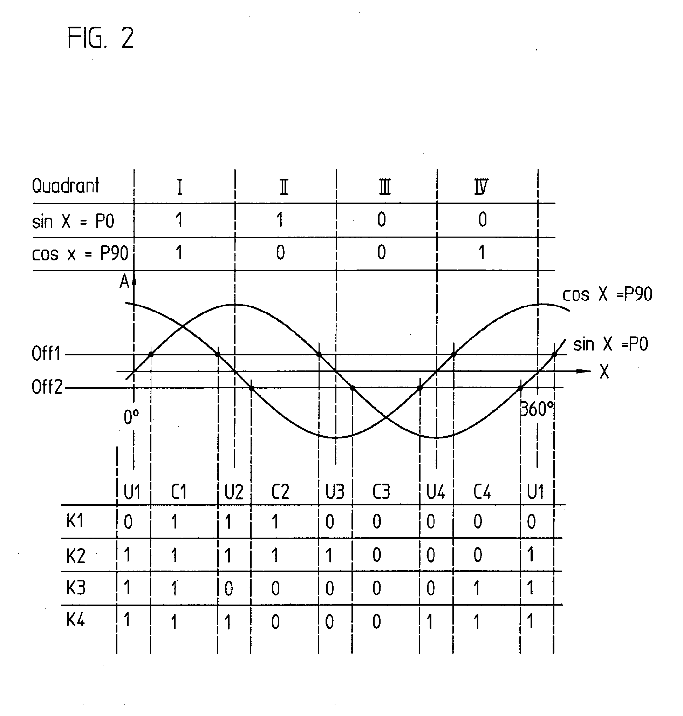

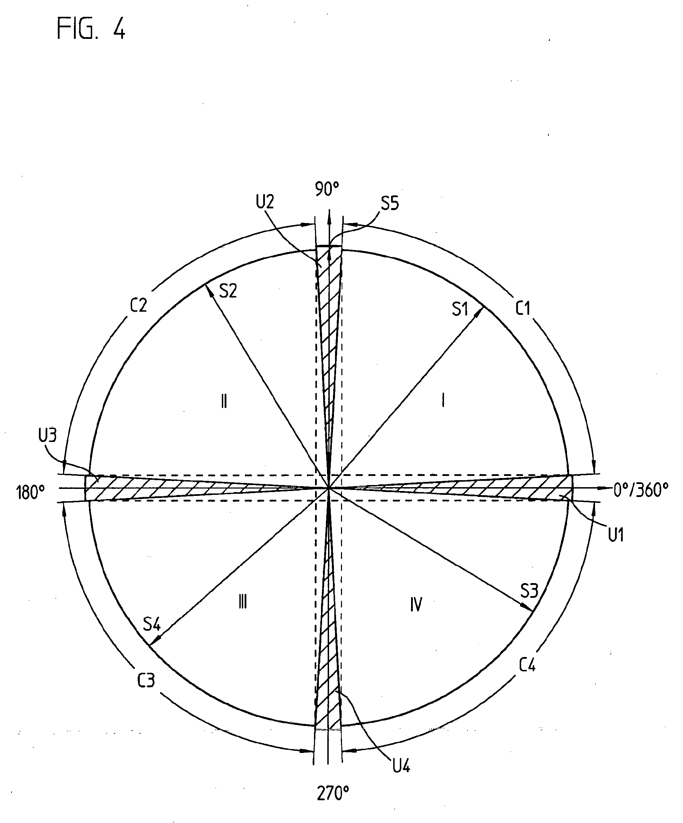

Die Abtastung der Winkelposition der Welle W ist so ausgestaltet, dass die Sensoren 10, 11 während einer Umdrehung der Welle W Positionssignale P0=sin x, P90=cos x mit einer Signalperiode pro Umdrehung erzeugen. Die Positionssignale P0, P90 der Sensoren 10, 11 weisen eine Phasenverschiebung auf, die mit Vorteil 90° beträgt. Aus den Positionssignalen P0, P90 können jetzt pro Umdrehung der Welle W vier Quadranten I, II, III, IV unterschieden werden und in bekannter Weise durch Feststellen der zeitlichen Abfolge der Quadranten I, II, III, IV ein Umdrehungszähler realisiert werden. Die Positionssignale P0 und P90 sowie die zugeordneten Quadranten I, II, III, IV sind in den Figuren 2 und 4 dargestellt.

Besonders vorteilhaft ist es, wenn die Sensoren 10, 11 auch noch zu den Positionssignalen P0, P90 inverse Positionssignale P180=-sin x, P270=-cos x erzeugen, da in diesem Fall eine differentielle Verarbeitung von je zwei um 180° phasenverschobenen Positionssignalen P0 sowie P180 und P90 sowie P270 ermöglicht und so eine erhöhte Störsicherheit erreicht wird.

Bei dem Umdrehungszähler ist aus Gründen des Stromverbrauchs, bzw. zur Erhöhung der Lebensdauer der Batterie, ein stromsparender Betriebsmodus möglich. In diesem Fall werden die Positionssignale P0, P90 nicht kontinuierlich erfasst, sondern nur jeweils Momentanwerte gemessen. Dieser Pulsbetrieb wird realisiert, indem die Sensoren 10, 11 und / oder zumindest Teile der nachfolgenden Auswerteschaltungen nur in zeitlichen Abständen mit Strom versorgt werden, also gepulst betrieben werden.

Der Umdrehungszähler ist also zumindest in zwei Betriebsmodi betreibbar, wobei der zweite Betriebsmodus einen energiesparenderen Betrieb als der erste Betriebsmodus zulässt.

Der erste Betriebsmodus kann ein Dauerbetrieb sein, bei dem kontinuierlich alle elektrischen Komponenten des Umdrehungszählers mit Energie versorgt sind und der zweite Betriebsmodus kann ein energiesparender gepulster Betrieb sein.

Ein besonders energiesparender Betrieb ist realisierbar, wenn die erste Betriebsart bereits ein gepulster Betrieb ist und auch die zweite Betriebsart ein gepulster Betrieb ist, wobei die Pulsrate bzw. dann auch die Abtastrate im zweiten Betriebsmodus geringer ist als im ersten Betriebsmodus. Dieser besonders energiesparender Betrieb wird nachfolgend weiter erläutert.

Das Prinzip der Umdrehungszählung ist in Figur 2 sowie in Figur 4 in einem Zeigerdiagramm dargestellt. Figur 2 zeigt, wie den Halbwellen der Positionssignale P0, P90 logische Pegel wie folgt zugeordnet sind:

Befindet sich das erste Positionssignal P0 in der positiven Halbwelle (Winkehlbereich der Welle W von 0°- 180°), so entspricht das einem logischen Highpegel ("1"), die negative Halbwelle (Winkelbereich der Welle W von 180°- 360°) entspricht einem logischen Lowpegel ("0"). Durch die Phasenverschiebung von 90° ergibt sich für das zweite Positionssignal P90 ein logischer Highpegel ("1") für die positive Halbwelle (Winkelbereich der Welle W von 0°-90° und 270°-360°) und ein logischer Lowpegel ("0") für die negative Halbwelle (Winkelbereich der Welle W von 90° bis 270°).

Bei dieser Zuordnung sind die vier Quadranten I, II, III, IV eindeutig nach folgender Tabelle unterscheidbar, wie auch aus der Figur 2 ersichtlich ist:

Quadrant I:   (P0 = 1) UND (P90 = 1)

Quadrant II:   (P0 = 1) UND (P90 = 0)

Quadrant III:   (P0 = 0) UND (P90 = 0)

Quadrant VI:  (P0 = 0) UND (P90 = 1)

Durch die Phasenverschiebung zwischen den Positionssignalen P0, P90 ist darüber hinaus eine Erkennung der Drehrichtung möglich, wobei sich für den Pulsbetrieb die Einschränkung ergibt, dass auch bei maximaler Drehzahl der Welle W mindestens ein Messwert pro Quadrant erfasst werden muss. In anderen Worten muss die Abtastrate SR, mit der Momentanwerte der Positionssignale P0, P90 erfasst werden, wenigstens das Vierfache der Umdrehungszahl der Welle W aufweisen. Liegen zwei aufeinanderfolgend aufgenommene Messwerte in gegenüberliegenden Quadranten, so kann nicht unterschieden werden, in welcher Drehrichtung dieser Quadrant erreicht wurde. Geht man also von einem ersten Abtastpuls S1 aus, der Messwerte im ersten Quadranten I liefert, und liegen die Messwerte der darauffolgenden Abtastpulse S2 oder S3 in den Quadranten II oder IV, so ist eine eindeutige, richtungsabhängige Umdrehungszählung möglich, liegt der darauffolgende Messwert bei einem Abtastpuls S4 im dritten Quadranten III, so ergibt sich ein Fehler, da keine Aussage darüber getroffen werden kann, in welcher Drehrichtung sich die Welle W gedreht hat, um Messwerte im dritten Quadranten hervorzurufen.

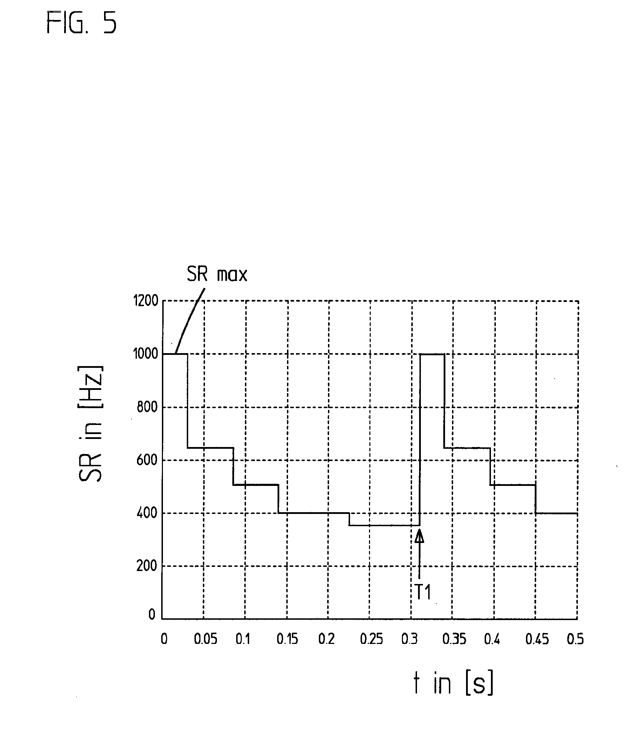

Wie eingangs erwähnt, kann der Stromverbrauch bei gepulster Abtastung weiter gesenkt werden, wenn bei Stillstand oder sehr langsamer Umdrehung der Welle W die Abtastrate SR reduziert wird. In Figur 5 ist dieser Fall dargestellt. Als maximale Abtastrate SRmax werden 1000 Abtastpulse pro Sekunde angenommen, was einer maximalen Drehzahl der Welle W von 250 Umdrehungen pro Sekunde entspricht. Wird nun für eine definierte Anzahl von Abtastpulsen, im dargestellten Beispiel 32, kein Quadrantenwechsel erkannt, so wird die Abtastrate SR in bestimmten Schritten reduziert. Das kann, wie dargestellt, stufenweise erfolgen, oder auch in einem Schritt, d.h. von einer maximalen Abtastrate SRmax zu einer minimalen Abtastrate SRmin. Sobald ein Quadrantenwechsel festgestellt wird (beispielsweise zum Zeitpunkt T1), wird die Abtastrate SR wieder auf die maximale Abtastrate SRmax gesetzt. Die minimale Abtastrate SRmin muss so gewählt sein, dass bei einer maximalen Beschleunigung der Welle W so schnell wieder auf die maximale Abtastrate SRmax geschaltet werden kann, dass kein Quadrantenwechsel übersehen und dadurch eine Fehlzählung, bzw. ein undefinierter Zustand entstehen kann.

Als problematisch hat es sich herausgestellt, wenn die Abtastpulse in unmittelbarer Nähe eines Quadrantenübergangs liegen, denn hier kann es passieren, dass die Messwerte sporadisch einen Quadrantenwechsel anzeigen, obwohl sich die Welle W nicht bewegt hat. Auslöser hierfür können beispielsweise systemimmanentes Rauschen, Messtoleranzen und Störeinflüsse, hervorgerufen durch die Einbauumgebung, sein. Diese Störungen führen dazu, dass, wenn die Abtastrate SR bereits reduziert wurde, bei jedem "springen" des Messwertes von einem Quadranten zum danebenliegenden Quadranten, also ohne tatsächliche Bewegung der Welle W, immer wieder auf die maximale Abtastrate SRmax zurückgeschaltet wird und sich so die Stromaufnahme wieder signifikant erhöht. In Figur 4 ist als Beispiel für einen Abtastpuls, der unsichere Messwerte hervorbringen kann, ein fünfter Abtastpuls S5 eingezeichnet.

Erfindungsgemäß werden nun im Bereich von Quadrantenübergängen Unsicherheitsbereiche U1 bis U4 definiert. Wird nun festgestellt, dass der Abtastpuls S5 einen Messwert liefert, der innerhalb des Unsicherheitsbereichs U2 liegt, der an den zuletzt festgestellten Quadranten (beispielsweise den Quadranten I) angrenzt, so wird diese Messung nicht beachtet, also weder zur Zählung der Umdrehungen der Welle W, noch als Kriterium für die Erhöhung der Abtastrate SR. Liegt der nächste Messwert aber eindeutig im darauffolgenden Quadranten II abzüglich des Unsicherheitsbereiches U2 (im Beispiel also im Bereich C2), oder im Quadranten III, oder im Quadranten IV abzüglich des Unsicherheitsbereiches U1 (im Beispiel also im Bereich C4), oder in einem Unsicherheitsbereich U der nicht an den zuletzt festgestellten Quadranten I angrenzt (im Beispiel U3, U4), findet eine Zählung statt. Die Unsicherheitsbereiche U1 bis U4 sind so festgelegt, dass sie den Winkelbereich um einen Segment- bzw. Quadrantenübergang, in dem ein "springen" des Messwertes auftreten kann, vollständig ausgrenzen.

Wie das Blockdiagramm in Figur 1 zeigt, erfolgt die Unterscheidung, ob sich die Welle W zu einem Abtastzeitpunkt in einem angrenzenden Unsicherheitsbereich U befindet, der Messwert also nicht weiter ausgewertet wird, oder aber der aktuelle Quadrant eindeutig bestimmbar ist, in einer Bestimmungseinheit 30. Bevor die Positionssignale P0, P90 und, optional, die inversen Positionssignale P180, P270 der Sensoren 10, 11 der Bestimmungseinheit 30 zugeführt werden, können sie einer Signalverarbeitungseinheit 20 zugeführt sein, die die Signale beispielsweise verstärkt und ggf. Stromsignale in Spannungssignale umwandelt. Während nun bei der herkömmlichen Auswertung lediglich festgestellt wird, welcher Halbwelle die Positionssignale P0, P90, P180, P270 zuzuordnen sind, wird jetzt festgestellt, ob sich die Positionssignale P0, P90, P180, P270 vor, nach oder in unmittelbarer Nähe eines Wechsels einer Halbwelle, also in einem Unsicherheitsbereich U befinden. Die Unsicherheitsbereiche U werden anhand der Positionswerte P0, P90 mittels der Bestimmungseinheit 30 ermittelt.

Die Bestimmungseinheit 30 gibt digitale Entscheidungssignale K1, K2, K3, K4 aus. Die logischen Pegel der Entscheidungssignale K1, K2, K3, K4 sind in Figur 2 dargestellt. Diese logischen Pegel codieren in Kombination die Unsicherheitsbereiche U1, U2, U3 und U4 sowie die dazwischen liegenden Winkelsektoren C1, C2, C3, C4 voneinander unterscheidbar. Die Winkelsektoren C1, C2, C3, C4 kennzeichnen Zählbereiche, also Winkelbereiche, die sicher einem Quadranten I, II, III, IV zugeordnet werden können. Die Unsicherheitsbereiche U1, U2, U3, U4 sind mit Vorteil so gewählt, dass sie einen wesentliche kleineren Winkelbereich umschließen als die Zählbereiche C1, C2, C3, C4. Typischerweise umschließt ein Unsicherheitsbereich U einen Segment- bzw. Quadrantenübergang symmetrisch mit einem Winkelsegment von 2° bis 10°, wobei in der Praxis bevorzugt Werte zwischen 3° und 5° gewählt werden.

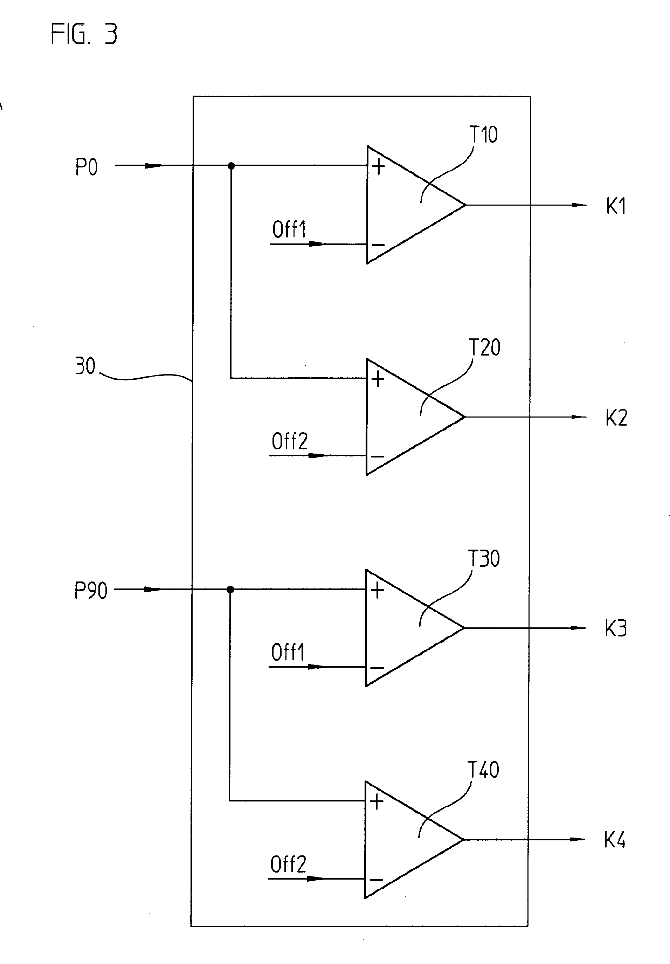

Ein Beispiel einer Bestimmungseinheit 30 ist in Figur 3 dargestellt. Die Bestimmungseinheit 30 besteht aus mehreren Komparatoren T10, T20, T30, T40, welche die Positionssignale P0=sin x, P90=cos x mit Vergleichssignalen Off 1 bzw. Off2 vergleichen und als Vergleichsergebnis jeweils ein Entscheidungssignal K1, K2, K3, K4 ausgeben. Die Vergleichssignale Off1 und Off2 bestimmen die Größe des Winkelsektors der Unsicherheitsbereiche U1, U2, U3 und U4. Wenn Off2=-Off1 ist, dann sind die Unsicherheitsbereiche U1, U2, U3 und U4 jeweils symmetrisch zum entsprechenden Quadrantenwechsel angeordnet.

Die Entscheidungssignale K1, K2, K3, K4 sind nun einer Zählsteuerungseinheit 40 zugeführt, die die logischen Pegel der Entscheidungssignale K1, K2, K3, K4 bzw. der Änderung der logischen Pegel zum Generieren von Zählsignalen UP, DOWN für einen Zähler 50 auswertet. Dabei werden Unsicherheitsbereiche U, die an den zuletzt zum Generieren von Zählsignalen UP, DOWN ausgewerteten Winkelbereich angrenzen, für die Generierung von Zählsignalen UP, DOWN nicht berücksichtigt, da, wie oben beschrieben, in diesen angrenzenden Unsicherheitsbereichen U keine sichere Aussage darüber getroffen werden kann, ob tatsächlich eine Drehung der Welle W stattgefunden hat oder nicht.

Die Sensoren 10, 11, sowie die Zählsteuerungseinheit 40 sind so ausgestaltet, dass sie einen Pulsbetrieb erlauben. Dazu erzeugt die Zählsteuerungseinheit 40 über eine Abtasttaktleitung 41 Abtastpulse S für die Abtastung der Sensoren 10, 11, so dass die Positionssignale P0, P90 Momentanwerte der Winkelposition der Welle W anzeigen. Dadurch werden bei einer Umdrehung der Welle W zwar nicht zwingend alle Winkelbereiche, die mit den Entscheidungssignalen K1, K2, K3, K4 codierbar sind, auch festgestellt, auch hier werden aber Unsicherheitsbereiche U, die an einen zum Generieren von Zählsignalen UP, DOWN ausgewerteten Winkelbereich angrenzen, für die Erzeugung von Zählsignalen UP, DOWN nicht berücksichtigt.

Hierzu ein Beispiel:

Wurde anhand der Positionssignale P0, P90 bei einer Messung, also einer Abtastung entsprechend dem in Figur 4 eingezeichneten Abtastpuls S1, der Zählbereich C1 im Quadranten I als Winkelbereich festgestellt und zur Generierung eines Zählsignals UP, DOWN ausgewertet und in einer darauffolgenden Messung wird ein an den Zählbereich C1 im Quadranten I angrenzender Unsicherheitsbereich U2 oder U1 ermittelt, so werden die dazugehörigen Entscheidungssignale K1, K2, K3, K4 nicht für die Generierung von  Zählsignalen UP, DOWN berücksichtigt. Liegen die Messwerte der darauffolgenden Messung dagegen in einem Zählbereich C4, C3, C2 oder in einem der nicht an den Quadranten I angrenzenden Unsicherheitsbereich U3, U4, so werden sie zum Generieren von Zählsignalen UP, DOWN ausgewertet.

Bei Stillstand, bzw. sehr langsamer Umdrehungsgeschwindigkeit wird nun, wie in Figur 5 gezeigt, eine Reduzierung der Abtastrate SR durchführt, wenn eine definierte Anzahl von Abtastpulsen S keine Änderung eines Winkelbereichs, also keine Änderung der Entscheidungssignale K1, K2, K3, K4 festgestellt wird. Ändert sich der Winkelbereich, der zu einer Reduzierung der Abtastrate SR geführt hat, so wird die Abtastrate SR nur dann erhöht, wenn die Entscheidungssignale K1, K2, K3, K4 keinen an diesen Winkelbereich angrenzenden Unsicherheitsbereich U anzeigen. Für das obige Beispiel bedeutet das, dass eine Reduzierung der Abtastrate SR durchgeführt wird, wenn eine definierte Anzahl von Abtastpulsen S innerhalb des Zählsegments C1 im ersten Quadranten I ermittelt wird. Die Abtastrate SR wird jedoch erst wieder erhöht, wenn ein anderer Winkelbereich als die beiden angrenzenden Unsicherheitsbereiche U1, U2 angezeigt wird. Dadurch wird gewährleistet, dass eine Erhöhung der Abtastrate SR nur dann erfolgt, wenn tatsächlich eine Winkelbewegung der Welle W stattgefunden hat. Wie oben beschrieben, wird die Abtastrate SR in diesem Fall auf die maximale Abtastrate SRmax gesetzt.

Der Zählerwert Z am Ausgang des Zählers 50 entspricht gleichzeitig dem Ausgangswert Z des Umdrehungszählers. Je nach Definition erzeugt die Zählsteuerungseinheit 40 bei jedem Quadrantenübergang ein Zählsignal UP, DOWN, oder nur bei einer bestimmten Anzahl von Übergängen, im Beispiel bei jedem vierten Quadrantenübergang, also nach jeder vollen Umdrehung der Welle W.

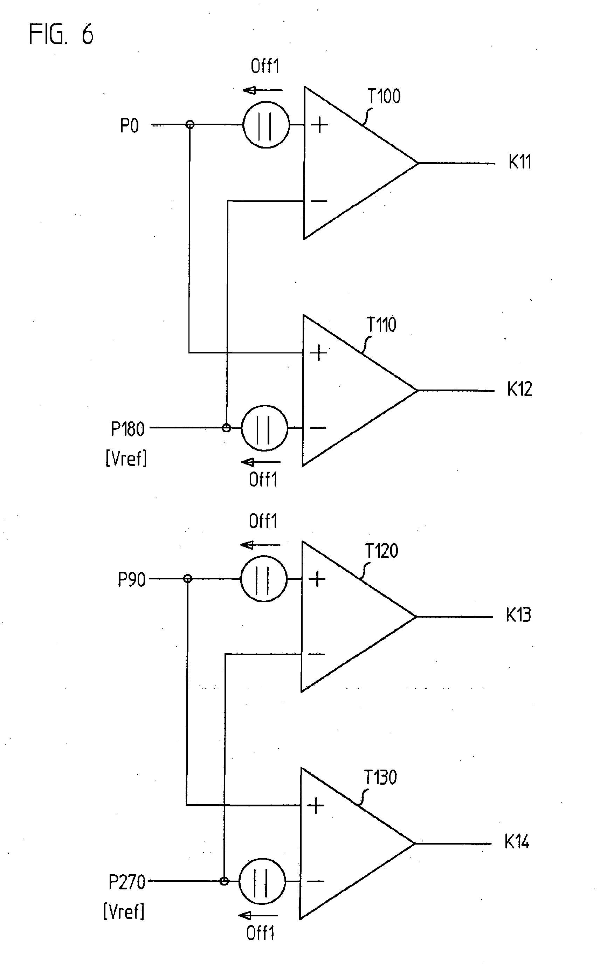

Figur 6 zeigt ein weiteres Beispiel einer Bestimmungseinheit, mit der aus den Positionssignalen P0, P90 und den dazu inversen Positionssignalen P180, P270 Entscheidungssignale K11, K12, K13 und K14 erzeugt werden, welche die in Figur 4 dargestellten Unsicherheitsbereiche U1, U2, U3, U4 und die Zählsegmente C1, C2, C3 und C4 voneinander unterscheidbar codieren. Zur Erzeugung des ersten positiven Entscheidungssignals K11 wird zum ersten Positionssignal P0 ein Vergleichssignal Off1 addiert und das Summensignal dem nicht invertierenden Eingang eines ersten Komparators T100 zugeführt. Der Vergleich findet mit dem ersten inversen Positionssignal P180 statt, das dem invertierenden Eingang des ersten Komparators T100 zugeführt ist.

Ein Entscheidungssignal K12 wird mit einem zweiten Komparator T110 gebildet, dem an seinem nicht invertierenden Eingang das erste Positionssignal P0 und am invertierenden Eingang ein Summensignal aus dem ersten inversen Positionssignal P180 und dem Vergleichssignal Off1 zugeführt ist.

Analog hierzu wird ein Entscheidungssignal K13 durch Vergleich eines Summensignals aus dem zweiten Positionssignal P90 und dem Vergleichssignal Off1 mit dem zweiten inversen Positionssignal P270 mittels eines dritten Komparators T120 gebildet.

Ein weiteres Entscheidungssignal K14 wird schließlich mit einem vierten Komparator T130 generiert, indem das zweite Positionssignal P90 mit einem Summensignal aus dem zweiten inversen Positionssignal P270 und dem Vergleichssignal Off1 verglichen wird.

Stehen die inversen Positionssignale P180, P270 nicht zur Verfügung, so kann stattdessen, wie in eckigen Klammern angegeben, eine Referenzspannung Vref verwendet werden, die einem Mittelwert zwischen Maximal- und Minimalwert der Sensorsignale P0, P90 entspricht.

Wird als Vergleichssignal Off1, Off2 ein konstanter Spannungswert verwendet, so ändert sich das Winkelsegment, das einen Unsicherheitsbereich U definiert wie in Figur 4 durch die gestrichelten Linien um die Quadrantenübergänge angedeutet. Mit Vorteil wird das Vergleichssignal Off1, Off2 daher  proportional zur Amplitude des zugehörigen Positionssignals P0, P90 angepasst.

**Patentansprüche**

1.  Umdrehungszähler zum Feststellen der Umdrehungszahl einer Welle (W), mit
    Sensoren (10, 11), mit denen Positionswerte (P0, P90) erzeugbar sind, welche die Winkelposition der Welle (W) definieren,
    einer Bestimmungseinheit (30), in der aus den Positionswerten (P0, P90) Entscheidungssignale (K1 bis K14) erzeugbar sind, die Zählsegmente (C1 bis C4) innerhalb einer Umdrehung der Welle (W) bestimmen,
    einer Zählsteuerungseinheit (40), die dazu ausgelegt ist in Abhängigkeit von der zeitlichen Abfolge der Zählsegmente (C1 bis C4) den Umdrehungszähler in einem ersten Betriebsmodus oder in einem zweiten Betriebsmodus zu betreiben und Zählsignale (UP, DOWN) für einen Zähler (50) zu generieren, und die Zählsteuerungseinheit (40) in den zweiten Betriebsmodus umzuschalteten,
    der ein energiesparender gepulster Betrieb ist, wenn nach einer definierten Zeit keine Änderung eines Zählsegments (C1 bis C4) erfolgt und in den ersten Betriebsmodus umzuschalteten, wenn eine Änderung eines Zählsegments (C1 bis C4) erfolgt,
    **dadurch gekennzeichnet, dass**
    die Bestimmungseinheit (3) dazu ausgelegt ist, zwischen jeweils zwei Zählsegmenten (C1 bis C4) zusätzlich einen Unsicherheitsbereich (U1 bis U4) zu bestimmen, und
    die Zählsteuerungseinheit (40) dazu ausgelegt ist, die Unsicherheitsbereiche (U1 bis U4), die an ein Zählsegment (C1 bis C4) angrenzen, das zu einer Umschaltung in den zweiten Betriebsmodus geführt hat, für die Umschaltung vom zweiten Betriebsmodus in den ersten Betriebsmodus nicht zu berücksichtigen.

2.  Umdrehungszähler nach Anspruch 1, **dadurch gekennzeichnet, dass** der erste und der zweite Betriebsmodus jeweils ein gepulster Betrieb des Umdrehungszählers ist, bei dem mit einer vorgegebenen Abtastrate (SR) gepulst die Positionswerte (P0, P90) erzeugbar sind, und dass die Abtastrate (SR) im ersten Betriebsmodus höher ist, als im zweiten Betriebsmodus.

3.  Umdrehungszähler nach Anspruch 1 oder 2, **dadurch gekennzeichnet, dass** die Bestimmungseinheit (30) dazu ausgelegt ist, eine Umdrehung der Welle (W) in mehrere voneinander unterscheidbare Zählsegmente (C1 bis C4) und jeweils zumindest einen zwischen zwei Zählsegmenten (C1 bis C4) liegenden Unsicherheitsbereich (U1 bis U4) zu codieren.

4.  Umdrehungszähler nach einem der vorhergehenden Ansprüche, **dadurch gekennzeichnet, dass** die Bestimmungseinheit (30) Komparatoren (T10 bis T130) umfasst.

5.  Verfahren zum Feststellen der Umdrehungszahl einer Welle (W), wobei Sensoren (10, 11) vorgesehen sind, mit denen Positionswerte (P0, P90) erzeugt werden, welche die Winkelposition der Welle (W) definieren, und die einer Bestimmungseinheit (30) zugeführt werden, die aus den Positionswerten (P0, P90) Entscheidungssignale (K1 bis K14) erzeugt, die Zählsegmente (C1 bis C4) innerhalb einer Umdrehung der Welle (W) bestimmen,
    die Entscheidungssignale (K1 bis K14) einer Zählsteuerungseinheit (40) zugeführt werden, die in Abhängigkeit von der zeitlichen Abfolge der Zählsegmente (C1 bis C4) den Umdrehungszähler in einem ersten Betriebsmodus oder in einem zweiten Betriebsmodus betreibt und Zählsignale (UP, DOWN) für einen Zähler (50) generiert, wobei die Zählsteuerungseinheit (40) in den zweiten Betriebsmodus umschaltet, der ein energiesparender gepulster Betrieb ist, wenn nach einer definierten Zeit keine Änderung eines Zählsegments (C1 bis C4) festgestellt wird und in den ersten Betriebsmodus umschaltet, wenn eine Änderung eines Zählsegments (C1 bis C4) festgestellt wird,
    **dadurch gekennzeichnet, dass**
    die Bestimmungseinheit (30) zwischen jeweils zwei Zählsegmenten (C1 bis C4) zusätzlich einen Unsicherheitsbereich (U1 bis U4) bestimmt, und die Unsicherheitsbereiche (U1 bis U4) die an ein Zählsegment (C1 bis C4) angrenzen, das zu einer Umschaltung in den zweiten Betriebsmodus geführt hat, für die Umschaltung vom zweiten Betriebsmodus in den ersten Betriebsmodus nicht berücksichtigt wird.

6.  Verfahren nach Anspruch 5, **dadurch gekennzeichnet, dass** der erste und der zweite Betriebsmodus jeweils ein gepulster Betrieb des Umdrehungszählers ist, bei dem mit einer vorgegebenen Abtastrate (SR) gepulst die Positionswerte (P0, P90) erzeugt werden, und dass die Abtastrate (SR) im ersten Betriebsmodus höher ist, als im zweiten Betriebsmodus.

7.  Verfahren nach Anspruch 5 oder 6, **dadurch gekennzeichnet, dass** die Bestimmungseinheit (30) eine Umdrehung der Welle (W) in mehrere voneinander unterscheidbare Zählsegmente (C1 bis C4) und jeweils zumindest einen zwischen zwei Zählsegmenten (C1 bis C4) liegenden Unsicherheitsbereich (U1 bis U4) codiert.

8.  Verfahren nach Anspruch 7, **dadurch gekennzeichnet, dass** die Codierung in voneinander unterscheidbare Zählsegmente (C1 bis C4) und Unsicherheitsbereiche (U1 bis U4) einer Umdrehung der Welle (W) mittels eines Komparatoren (T10 bis T130) erfolgt.

**Claims**

1.  Revolution counter for determining the number of revolutions of a shaft (W), having
    sensors (10, 11) with which position values (P0, P90) which define the angular position of the shaft (W) can be generated,
    a determining unit (30) in which decision signals (K1 to K14), which determine counting segments (C1 to C4) within one revolution of the shaft (W), can be generated from the position values (P0, P90),
    a counting control unit (40) which is configured to operate the revolution counter in a first operating mode or in a second operating mode depending on the time sequence of the counting segments (C1 to C4) and to generate counting signals (UP, DOWN) for a counter (50), and to switch the counting control unit (40) into the second operating mode which is an energy-saving, pulsed mode if no change occurs in a counting segment (C1 to C4) after a defined time, and to switch into the first operating mode if a change occurs in a counting segment (C1 to C4),
    **characterized in that**
    the determining unit (30) is configured additionally to determine an uncertainty range (U1 to U4) between two counting segments (C1 to C4) in each case, and
    the counting control unit (40) is configured not to take into account the uncertainty ranges (U1 to U4) which adjoin a counting segment (C1 to C4) which has brought about switching over into the second operating mode, for the switching from the second operating mode into the first operating mode.

2.  Revolution counter according to Claim 1, **characterized in that** the first and second operating modes are each a pulsed mode of the revolution counter, in which the position values (P0, P90) can be generated with a predefined sampling rate (SR), and **in that** the sampling rate (SR) is higher in the first operating mode than in the second operating mode.

3.  Revolution counter according to Claim 1 or 2, **characterized in that** the determining unit (30) is configured to encode a revolution of the shaft (W) into a plurality of counting segments (C1 to C4), which can be differentiated from one another, and in each case at least one uncertainty range (U1 to U4) between two counting segments (C1 to C4).

4.  Revolution counter according to one of the preceding claims, **characterized in that** the determining unit (30) comprises comparators (T10 to T130).

5.  Method for determining the number of revolutions of a shaft (W), wherein sensors (10, 11) are provided with which position values (P0, P90) which define the angular position of the shaft (W) are generated, which position values (P0, P90) are fed to a determining unit (30) which generates decision signals (K1 to K14) from the position values (P0, P90), which decision signals (K1 to K14) determine counting segments (C1 to C4) within one revolution of the shaft (W),
    the decision signals (K1 to K14) are fed to a counting control unit (40) which operates the revolution counter in a first operating mode or in a second operating mode depending on the time sequence of the counting segments (C1 to C4), and generates counting signals (UP, DOWN) for a counter (50), wherein the counting control unit (40) switches into the second operating mode which is an energy-saving, pulsed mode if no change occurs in a counting segment (C1 to C4) after a defined time, and into the first operating mode if a change is detected in a counting segment (C1 to C4),
    **characterized in that**
    the determining unit (30) additionally determines an uncertainty range (U1 to U4) between two counting segments (C1 to C4) in each case, and the uncertainty ranges (U1 to U4) which adjoin a counting segment (C1 to C4) which has brought about switching into the second operating mode, is not taken into account in the switching from the second operating mode into the first operating mode.

6.  Method according to Claim 5, **characterized in that** the first and the second operating modes are each a pulsed mode of the revolution counter, and in which the position values (P0, P90) are generated in a pulsed fashion with a predefined sampling rate (SR), and **in that** the sampling rate (SR) in the first operating mode is higher than in the second operating mode.

7.  Method according to Claim 5 or 6, **characterized in that** the determining unit (30) encodes a revolution of the shaft (W) into a plurality of counting segments (C1 to C4) which can be differentiated from one another, and respectively encodes at least one uncertainty range (U1 to U4) lying between two counting segments (C1 to C4).

8.  Method according to Claim 7, **characterized in that** the encoding takes place in counting segments (C1 to C4) which can be differentiated from one another, and uncertainty ranges (U1 to U4) of one revolution of the shaft (W) take place by means of a comparator (T10 to T130).

**Revendications**

1.  Compte-tours destiné à définie le nombre de tours effectués par un arbre (W), le compteur présentant
    des capteurs (10, 11) qui permettent de former des valeurs de position (P0, P90) qui définissent la position angulaire de l'arbre (W),
    une unité de détermination (30) dans laquelle des signaux de décision (K1 à K14) qui définissent des segments de comptage (C1 à C4) à l'intérieur d'un tour de l'arbre (W) peuvent être formés à partir des valeurs de position (P0, P90),
    une unité (40) de commande de comptage conçue pour conduire le compte-tours dans un premier mode de fonctionnement ou dans un deuxième mode de fonctionnement en fonction de la succession temporelle des segments de comptage (C1 à C4), pour produire pour un compteur (50) des signaux de comptage (UP, DOWN) et pour commuter l'unité (40) de commande de comptage dans le deuxième mode de fonctionnement qui est un fonctionnement pulsé à économie d'énergie si aucune modification d'un segment de comptage (C1 à C4) n'a eu lieu après une durée définie et pour la commuter dans le premier mode de fonctionnement si une modification de segment de comptage (C1 à C4) a eu lieu,
    **caractérisé en ce que**
    l'unité de détermination (30) est conçue pour déterminer une plage d'incertitude (U1 à U4) en complément entre deux segments de comptage (C1 à C4) et
    **en ce que** l'unité (40) de commande de comptage est conçue pour ne pas tenir compte des plages d'incertitude (U1 à U4) adjacentes à un segment de comptage (C1 à C4) qui a conduit une commutation dans le deuxième mode de commutation pour la commutation depuis le deuxième mode de fonctionnement jusque dans le premier mode de fonctionnement.

2.  Compte-tours selon la revendication 1, **caractérisé en ce que** le premier et le deuxième mode de fonctionnement sont des modes de fonctionnement pulsés du compte-tours, dans lesquels les valeurs de position (P0, P90) peuvent être formées de manière pulsée à un taux d'échantillonnage (SR) prédéterminé et **en ce que** le taux d'échantillonnage (SR) est plus élevé dans le premier mode de fonctionnement que dans le deuxième mode de fonctionnement.

3.  Compte-tours selon les revendications 1 ou 2, **caractérisé en ce que** l'unité de détermination (30) est conçue pour coder un tour de l'arbre (W) en plusieurs segments de comptage (C1 à C4) distincts les uns des autres et au moins une plage de certitude (U1 à U4) située entre deux segments de comptage (C1 à C4).

4.  Compte-tours selon l'une des revendications précédentes, **caractérisé en ce que** l'unité de détermination (30) comporte des comparateurs (T10 à T130).

5.  Procédé de détermination de la vitesse de rotation d'un arbre (W), dans lequel des capteurs (10, 11) qui forment des valeurs de position (P0, P90) qui définissent la position angulaire de l'arbre (W) sont prévus, ces valeurs de position étant apportées à une unité de détermination (30) qui forme à partir des valeurs de position (P0, P90) des signaux de décision (K1 à K14) qui définissent les segments de comptage (C1 à C4) à l'intérieur d'un tour de l'arbre (W),
    les signaux de décision (K1 à K14) étant apportés à une unité (40) de commande de comptage qui conduit le compte-tours dans un premier mode fonctionnement ou dans un deuxième mode de fonctionnement en fonction de la succession temporelle des segments de comptage (C1 à C4) et qui produit des signaux de comptage (UP, DOWN) pour un compteur (50), l'unité (40) de commande de comptage commutant dans le deuxième mode de fonctionnement, qui est un fonctionnement pulsé à économie d'énergie, si après une durée définie, aucune modification d'un segment de comptage (C1 à C4) n'a été constatée et commute dans le premier mode de fonctionnement si une modification d'un segment de comptage (C1 à C4) a été constatée,

**caractérisé en ce que**

l'unité de détermination (30) détermine de plus une plage d'incertitude (U1 à U4) entre deux segments de comptage (C1 à C4), les plages d'incertitude (U1 à U4) adjacentes à un segment de comptage (C1 à C4) qui a conduit à une commutation dans le deuxième mode de fonctionnement n'étant pas prises en compte pour la commutation du deuxième mode de fonctionnement dans le premier mode de fonctionnement.

6. Procédé selon la revendication 5, **caractérisé en ce que** le premier et le deuxième mode de fonctionnement sont des modes de fonctionnement pulsés du compte-tours, dans lesquels les valeurs de position (P0, P90) peuvent être formées de manière pulsée à un taux d'échantillonnage (SR) prédéterminé et **en ce que** le taux d'échantillonnage (SR) est plus élevé dans le premier mode de fonctionnement que dans le deuxième mode de fonctionnement.

7. Procédé selon les revendications 5 ou 6, **caractérisé en ce que** l'unité de détermination (30) est conçue pour coder un tour de l'arbre (W) en plusieurs segments de comptage (C1 à C4) distincts les uns des autres et au moins une plage de certitude (U1 à U4) située entre deux segments de comptage (C1 à C4).

8. Procédé selon la revendication 7, **caractérisé en ce que** le codage en segments de comptage (C1 à C4) distincts les uns des autres et en plages d'incertitude (U1 à U4) dans un tour de l'arbre (W) s'effectuent au moins d'un comparateur (T10 à T130).

FIG. 1

EP 2 379 987 B1

## FIG. 2

| Quadrant | I | II | III | IV |
|---|---|---|---|---|
| sin X = P0 | 1 | 1 | 0 | 0 |
| cos x = P90 | 1 | 0 | 0 | 1 |

|  | U1 | C1 | U2 | C2 | U3 | C3 | U4 | C4 | U1 |
|---|---|---|---|---|---|---|---|---|---|
| K1 | 0 | 1 | 1 | 1 | 0 | 0 | 0 | 0 | 0 |
| K2 | 1 | 1 | 1 | 1 | 1 | 0 | 0 | 0 | 1 |
| K3 | 1 | 1 | 0 | 0 | 0 | 0 | 0 | 1 | 1 |
| K4 | 1 | 1 | 1 | 0 | 0 | 0 | 1 | 1 | 1 |

FIG. 3

FIG. 4

FIG. 5

FIG. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102006046531 A1
- DE 102006035120 A1

- EP 1076226 B1